(19) **Europäisches Patentamt**
**European Patent Office**
**Office européen des brevets**

(11) **EP 3 359 365 B1**

(12) **EUROPÄISCHE PATENTSCHRIFT**

(45) Veröffentlichungstag und Bekanntmachung des Hinweises auf die Patenterteilung:
**14.08.2019 Patentblatt 2019/33**

(21) Anmeldenummer: **16779045.0**

(22) Anmeldetag: **05.10.2016**

(51) Int Cl.:
**B29C 45/76** (2006.01)

(86) Internationale Anmeldenummer:
**PCT/EP2016/073737**

(87) Internationale Veröffentlichungsnummer:
**WO 2017/060270 (13.04.2017 Gazette 2017/15)**

(54) **VERFAHREN ZUR BESTIMMUNG EINES REALEN VOLUMENS EINER SPRITZGIESSFÄHIGEN MASSE IN EINEM SPRITZGIESSPROZESS**

METHOD FOR DETERMINING AN ACTUAL VOLUME OF AN INJECTION-MOULDABLE COMPOUND IN AN INJECTION-MOULDING PROCESS

PROCÉDÉ POUR LA DÉTERMINATION D'UN VOLUME RÉEL D'UNE MASSE MOULABLE PAR INJECTION DANS UNE OPÉRATION DE MOULAGE PAR INJECTION

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **09.10.2015 DE 102015117237**

(43) Veröffentlichungstag der Anmeldung:
**15.08.2018 Patentblatt 2018/33**

(73) Patentinhaber: **KraussMaffei Technologies GmbH 80997 München (DE)**

(72) Erfinder:
• **SCHIFFERS, Reinhard**
**47269 Duisburg (DE)**

• **MOSER, Stefan**
**85399 Hallbergmoos (DE)**
• **KRUPPA, Stefan**
**81541 München (DE)**
• **BUSL, Matthias**
**85757 Karlsfeld (DE)**

(74) Vertreter: **Wilhelm, Ludwig**
**KraussMaffei Group GmbH Krauss-Maffei-Strasse 2 80997 München (DE)**

(56) Entgegenhaltungen:
**WO-A1-02/051615      DE-A1-102007 030 637 US-A1- 2003 071 382**

**Beschreibung**

Die Erfindung betrifft ein Verfahren zur Bestimmung eines realen Füllvolumens einer Kavität eines Spritzgießwerkzeuges mit einer spritzgießfähigen Masse nach dem Oberbegriff des Anspruchs 1.

Spritzgießmaschinen erlauben in sehr hoher Präzision Bewegungen sämtlicher Achsen und Antriebe. Besonders die translatorische Schneckenbewegung zum Einbringen von z. B. geschmolzenen Thermoplasten (Schmelzen) in eine Kavität eines Formwerkzeuges ist insbesondere bei elektrischen Spritzgießmaschinen in hohem Maße geregelt und reproduzierbar. Nicht maschinenbedingte Schwankungen, z.B. Umgebungsschwankungen und Anfahreffekte haben aber einen negativen Einfluss auf die Reproduzierbarkeit eines Spritzgießprozesses bei der Herstellung von Spritzgießformteilen. Der bislang im Stand der Technik übliche Ansatz zur Stabilisierung der Formteilqualität ist es, Temperaturen, Beschleunigungen (der Schnecke), Geschwindigkeiten usw. über die Produktionszeit möglichst konstant zu halten.

Diese Maßnahmen können aber Schwankungen oder Änderungen, die im Material, der Temperaturumgebung der Maschine oder sonst äußerlich auftreten oder mechanisch-physikalische Effekte (wie z. B. Granulatkorn-Einzug oder Effekte der Rückströmsperre) nicht immer kompensieren. Trotz immer gleicher Prozessführung können diese Schwankungen oder Änderungen zu unterschiedlicher Formfüllung und damit zu einer unterschiedlichen Qualität der Formteile führen.

Im Stand der Technik wird zur Messung und Regelung des Einspritzprozesses auf reine Maschinengrößen zurückgegriffen. So wird beispielsweise in der Einspritzphase meistens die Geschwindigkeit und in Nachdruckphasen der Massedruck konstant gehalten. Ein Einspritzvolumen ist bei den meisten Maschinen mess- und anzeigbar. Allerdings ist dies ein theoretisches Einspritzvolumen, welches sich durch einfache Berechnung aus dem tatsächlichen zurückgelegten Schneckenweg und der Schneckenquerschnittsfläche ergibt. Insoweit ist also das im Stand der Technik verwendete Einspritzvolumen als theoretisches Volumen anzusehen. Eine real existierende Kompressibilität des verwendeten spritzgießfähigen Materials bleibt jedoch unberücksichtigt.

Aus der DE 10 2007 030 637 B4 ist es bekannt, die Materialkompressibilität einer Schmelze zu messen und zur Bestimmung eines Mischungsverhältnisses zweier Materialkomponenten zu verwenden oder hierbei zu berücksichtigen.

Aus der DE 10 2005 016 617 B3 ist es bekannt, eine Nachdruckzeit anzupassen, wobei der Spritzgießprozess anhand des Absinkens eines Kunststoff-Volumenstromes gesteuert wird. Auch hier erfolgt die Bestimmung des Kunststoff-Volumenstromes aus dem Schneckenweg und entspricht daher dem theoretischen Volumen, welches je nach Druckniveau während der Nachdruckphase unterschiedlich stark komprimiert sein kann.

Aus der EP 1 074 374 A1 ist ein sogenannter Expansionsspritzgießprozess bekannt, bei dem die Kompressibilität der Schmelze zur Füllung einer Kavität des Formwerkzeuges genutzt wird. Ein komprimiertes Schmelzevolumen wird während des Entspannungsprozesses (Dekompression) in die Kavität eines Formwerkzeuges geleitet und hierbei entspannt. Ein aktives Füllen, beispielsweise durch ein Verfahren der Schnecke findet aber nicht statt. Damit eine vollständige Werkzeugfüllung erfolgt, muss das Expansionsvolumen dem Füllvolumen entsprechen. Ein tatsächlich eingebrachtes Volumen wird bei dem aus der oben genannten Schrift bekannten Verfahren weder gemessen noch zu einer Steuerung der Maschine herangezogen.

Aus der JP H01-146718 A ist es bekannt, zur Abschätzung einer Schrumpfung einer verdichteten Einspritzmasse, u. a. ein k-v-t-Diagramm der Spritzgießmasse heranzuziehen.

Aus der US 5,260,010 ist es bekannt, zur Bestimmung eines Füllgewichts eines Spritzlings verschiedene Parameter der Spritzgießmaschine vor und nach dem Endspritzen zu ermitteln.

Aus der DE 36 08 973 A1 ist ein Verfahren zum Steuern der Verdichtungsphase beim Spritzgießen thermoplastischer Formmassen bekannt, wobei über eine volumetrische Füllung des Formwerkzeuges hinaus ein Verdichtungsdruck über eine Haltezeit hinweg ausgeübt wird. Dies bewirkt eine Massenachlieferung in das Formwerkzeug bis der Angusskanal versiegelt ist. Es wird vorgeschlagen, die Versiegelung gegebenenfalls durch ein speziell hierfür vorgesehenes Angussverschlussorgan herbeizuführen.

Aus der DE 10 2013 111 328 A1 ist ein Verfahren zur Beurteilung verfahrenstechnischer Eigenschaften von Spritzgießwerkzeugen bekannt. Hierbei erfolgt eine qualitative Einstufung des Füllverhaltens von Spritzgießwerkzeugen anhand charakteristischer Werte, die im Rahmen eines Lernzyklusses ermittelt werden.

Aus der DE 10 2013 111 257 B3 ist ein Bemühen bekannt, das Füllvolumen in einem Spritzgießprozess möglichst konstant zu halten. Dies unter Berücksichtigung von maschinenexternen Schwankungen wie zum Beispiel einer Hallentemperatur, Schwankungen des zu verarbeiteten Materials und andere die Viskosität des Materials beeinflussende Parameter.

In dem vorgestellten Verfahren wird ein Formteilvolumen-äquivalent definiert, das durch Anpassung des Umschaltpunktes konstant gehalten wird. Diese Messgröße wird aus der Division einer Fließzahl und einer mittleren Viskosität gebildet. Die Fließzahl ist ein Druckintegral über den gesamten oder einen Teil des Einspritzvorganges. Die Viskosität wird aus dem mittleren Druck in einem Teil der Füllphase sowie der mittleren Geschwindigkeit in diesem Bereich gebildet. Die Nachdruckhöhe wird abhängig von der Viskositätsänderung relativ zu einer Referenz in einem Lernprozess angepasst.

Im Stand der Technik wird bisher von keiner vorgeschlagenen Lösung kompressionsbereinigt das Volumen der Formmasse, das heißt einer in irgendeiner Art spritzgießfähigen Masse, welches in eine Kavität eines Formwerkzeuges eingebracht werden soll, gemessen oder geregelt. Die Kompressibilität von spritzgießfähigen Massen, sei es thermoplastische Schmelzen oder Duroplaste, Silikone, Lacke oder dergleichen wird im Wesentlichen nicht berücksichtigt, um eine korrekte Formfüllung zu gewährleisten.

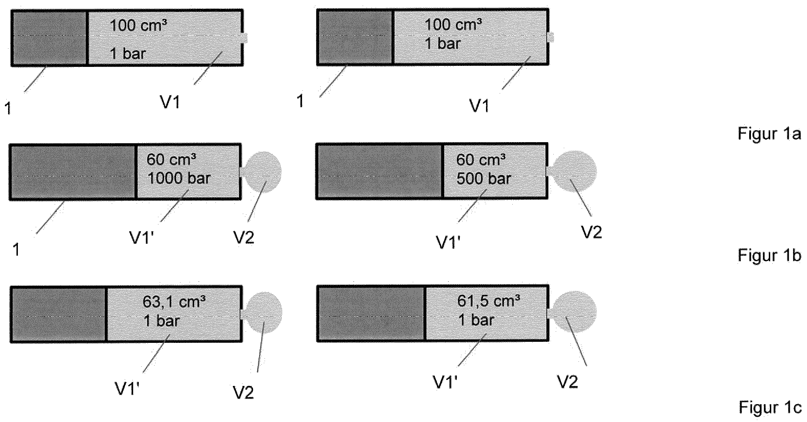

Beispielsweise ist eine Anzeige und eine Steuerung über das theoretische Volumen und den theoretischen Volumenstrom, der bisher aus geometrischen Randbedingungen wie z. B. dem Schneckendurchmesser und dem Schneckenweg ermittelt wird, kompressionsbehaftet. Das bedeutet, dass beispielsweise wenn die Schnecke von einem Volumen von 100 cm$^3$ bei 1 bar Druck auf eine Position von 60 cm$^3$ bei 1000 bar Massedruck bewegt wird, das Füllvolumen (und damit auch die Füllmasse) in der Form ein anderes als wenn der Massedruck nur auf 500 bar steigt. Beispielhaft sei erwähnt, dass bei einer theoretischen Kompressibilität von 5 % pro 1000 bar Massedruck im ersten Fall nach Druckentlastung von 63,1 cm$^3$ Volumen im Schneckenvorraum, im zweiten Fall nur 61,5 cm$^3$ Volumen im Schneckenvorraum vorhanden sind. Dies bedeutet, dass in die Kavität im zweiten Fall 1,6 cm$^3$ mehr unkomprimierte Schmelze eingebracht wurde. Dies ist in Figur 1 schematisch dargestellt. Wird also bei gleichem Volumen oder äquivalent bei gleichem Schneckenweg der Einspritzvorgang beendet, so werden bei unterschiedlichen Drücken unterschiedliche Formteilmassen eingebracht. Druckunterschiede treten aber aufgrund von Temperaturschwankungen und Viskositätsänderungen des Materials auf und beeinflussen damit die Bauteilqualität und die Gewichtskonstanz des fertigen Formteiles.

Wie oben bereits erläutert, wird in der DE 10 2013 111 257 B3 ein Formteilvolumen gemessen. Dies erfolgt allerdings nicht direkt sondern indirekt über das "Formteilvolumen-Äquivalent".

Dieses "Formteilvolumen-Aquivalent" wird auch zur Ermittlung des Nachdruckumschaltpunktes verwendet. Das Verfahren setzt implizit einen ähnlichen Massedruck-Kurvenverlauf voraus.

Ein Anwendungsfall für eine adaptive Prozessführung wäre auch eine "Störung" in Form eines Plastifizierungs- bzw. Maschinenwechsels. Dies bedingt vor allem eine Unabhängigkeit der Messwerte vom Schneckendurchmesser. Diese Eigenschaft ist bei der Ermittlung der Fließzahl über das Druckintegral über die Einspritzzeit und damit dem Formteilvolumen-Äquivalent nicht gegeben.

Aufgabe der Erfindung ist es daher, ein Verfahren zur Bestimmung eines realen Volumens einer spritzgießfähigen Masse während eines Spritzgießprozesses anzugeben. Des Weiteren soll ein solches Verfahren gewährleisten, dass die Bauteilqualität, insbesondere das Bauteilvolumen und die Formfüllung in besonderem Maße konstant haltbar sind. Des Weiteren soll gewährleistet werden, dass ein und dasselbe Formwerkzeug mit vermindertem, insbesondere mit stark vermindertem Einfahraufwand alleine aufgrund von charakteristischen Größen einer Spritzgießmaschine auf eine andere Spritzgießmaschine übertragbar und diese mit diesem Formwerkzeug kostengünstig betreibbar ist.

Diese Aufgaben werden mit einem Verfahren mit den Merkmalen des Anspruchs 1 gelöst. Vorteilhafte Ausführungsformen sind in den Unteransprüchen angegeben.

Ein Verfahren zur Bestimmung eines realen Volumens $V_r$ einer spritzgießfähigen Masse während eines Spritzgießprozesses, wobei die spritzgießfähige Masse in zumindest eine Kavität eines Formwerkzeuges verbracht wird, weist die folgenden Schritte auf:

a) Ermittlung eines theoretischen Volumens $V_t$ aus Prozessgrößen zumindest während einer Füllphase des Spritzgießprozesses,
b) Ermittlung und/oder Messung zumindest eines Wertes für zumindest einen Massedruck $p_M$.

Ein solches Verfahren ist erfindungsgemäß weitergebildet durch die Schritte:

c) Auswahl einer dem Wert von $p_M$ entsprechenden materialspezifischen Kompression k(p) der spritzgießfähigen Masse und
d) Berechnung eines realen Volumens $V_r$ unter Berücksichtigung der Kompression k(p).

Beim erfindungsgemäßen Verfahren wird nunmehr erstmals eine real vorliegende Kompression der spritzgießfähigen Masse unter Druck als maßgeblich für die Bestimmung eines realen Volumens $V_r$ während eines Spritzgießprozesses herangezogen. Mit der Erfindung gelingt es somit erstmals, Formfüllungen über mehrere Spritzgießprozesse hinweg konstant zu halten, zumindest jedoch gegenüber dem Stand der Technik wesentlich zu vergleichmäßigen, da erkannt wurde, dass die Kompression des spritzgießfähigen Materials wesentlichen Einfluss auf die Füllung der Kavität im Formwerkzeug hat und somit Auswirkungen auf die Bauteilqualität besitzt. Zur Erläuterung sei angegeben, dass unter dem Begriff "Füllphase", wie er im oben genannten Merkmal a) und in der gesamten Anmeldung verwendet wird, die Einspritzphase und die Nachdruckphase eines Spritzgießprozesses, also der gesamte Zeitraum, in dem Formmasse in eine Kavität gelangt, zu verstehen ist.

In einer vorteilhaften Ausführungsform des erfindungsgemäßen Verfahrens wird nach der Berechnung eines realen Volumens $V_r$ unter Berücksichtigung der Kompression k(p) (Schritt d) des Verfahrens) eine Anpassung von Maschinenparametern der Spritzgießmaschine vorgenommen, die derart erfolgt, dass ein Erreichen eines idealen realen Füllvolumens $\Delta V_{ri}$ der zumindest einen Kavität erfolgt. Ein solches ideales reales Füllvolumen $\Delta V_{ri}$ führt beispielsweise zu einem Gutteil und kann als Zielgröße definiert werden, welche es in möglichst genauer Art und Weise immer wieder, das heißt bei jedem Schuss, zu erreichen gilt.

In einer weiteren vorteilhaften Ausführungsform der Erfindung erfolgt die Auswahl der materialspezifischen Kompression k(p) der spritzgießfähigen Masse aus einer in einer Maschinensteuerung hinterlegten materialspezifischen Kompressionskurve k(p), insbesondere aus einer in der Maschinensteuerung hinterlegten adiabaten Kompressionskurve. Aus einer solchen materialspezifischen Datensammlung in der Spritzgießmaschine ist es möglich, für jeden momentan vorliegenden Druckwert $p_M$ die entsprechende Kompression, z. B. in % auszulesen und somit ein reales Volumen $V_r$ zu berechnen.

Es hat sich bewährt als Massedruck $p_M$ einen Massedruck beispielsweise in einem Zylinder oder einen Werkzeuginnendruck der Formmasse (spritzgießfähigen Masse) oder einen Formmassendruck im Schneckenvorraum zu verwenden. Zweckmäßiger Weise werden zumindest zwei Werte A und B des Massedrucks $p_M$ während eines definierten Prozessfensters ermittelt und/oder gemessen. Bevorzugt werden die zwei Werte A und B von einer gleichen Massedruckart gemessen um eine hohe Vergleichbarkeit bzw. Reduzierbarkeit erzielen zu können.

Gegebenenfalls kann es auch zweckmäßig sein, die Werte A und/oder B als Mittelwerte über mehrere einzelne Messwerte des Massedruckes $p_M$ zu bestimmen.

Des Weiteren kann zweckmäßiger Weise ein reales Füllvolumen $\Delta V_r$ welches einer Differenz aus kompressionsbereinigten Volumina $V_{rA}$ und $V_{rB}$ zwischen den Positionen A und B entspricht, nach der Formel

$$\Delta V_r = \frac{V_{tFB}}{1 - k(p_{FB})} - \frac{V_{tFA}}{1 - k(p_{FA})} = \frac{V_{tSA}}{1 - k(p_{SA})} - \frac{V_{tSB}}{1 - k(p_{SB})}$$

berechnet werden. Ein derartiges kompressionsbereinigtes reales Füllvolumen $\Delta V_r$ berücksichtigt die Kompressibilität der spritzgießfähigen Masse bei Drücken $p_M$ an verschiedenen Positionen A und B. Dabei sind:

| | |
|---|---|
| $p_{FB}$: | ein Formmassendruck an einer Position B |
| $p_{FA}$: | ein Formmassendruck an einer Position A |
| $p_{SA}$: | ein Formmassendruck im Schneckenvorraum an der Position A |
| $p_{SB}$: | ein Formmassendruck im Schneckenvorraum an der Position B. |

Erfindungsgemäß wurde somit erkannt, dass Verhältnisse hinsichtlich der realen Füllvolumina $\Delta V_r$ innerhalb einer Kavität kompressionsbereinigt z. B. anhand von Druckverhältnissen im Bereich eines Schneckenvorraums ermittelt werden können. Die Druckwerte im Schneckenvorraum ($p_{SA}$ oder $p_{SB}$) sind mit an Spritzgießmaschinen vorhandenen Messmitteln wesentlich einfacher und insbesondere genauer zu bestimmen als Druckverhältnisse innerhalb einer Form, insbesondere während der Formfüllung. Somit gelingt es über die Beobachtung des Druckes $p_S$ im Schneckenvorraum eine zuverlässige Aussage über ein reales Füllvolumen $\Delta V_r$ in der Kavität zu erhalten.

Alternativ oder kumulativ kann auch ein realer Füllvolumenstrom $\Delta \dot{V}_r$ durch Ableitung des realen Füllvolumens $\Delta V_r$ nach der Zeit t über einen Zeitraum, z. B. aus der Gleichung

$$\Delta \dot{V}_r = \frac{\Delta V_r}{t_B - t_A}$$

ermittelt werden.

Anstelle der Zeitpunkte $t_B$ und/oder $t_A$ kann bei der Ermittlung des realen Füllvolumenstroms $\Delta \dot{V}_r$ auch eine Schneckengeschwindigkeit $v_S$ während des Einspritzvorganges oder während der Nachdruckphase zur Berechnung des realen Füllvolumenstroms $\Delta \dot{V}_r$ verwendet werden.

Dieser reale Volumenstrom $\Delta \dot{V}_r$ oder das reale Füllvolumen $\Delta V_r$ kann während der Füllphase mit einer Referenzkurve eines realen Füllvolumens $\Delta V_{rR}$ und/oder eines realen Volumenstroms $\Delta \dot{V}_{rR}$ verglichen werden. Dadurch können Störungen bei der Füllung der mindestens einen Kavität durch eine Abweichung von der Referenz erkannt werden. So kann z. B. bei Verschluss einer Kaskade oder Heißkanaldüse der Spritzprozess zum Schutz des Werkzeuges vor Beschädigung abgebrochen werden.

Zur Steigerung der Genauigkeit kann zusätzlich zu jedem gemessenen theoretischen Volumen $V_t$ für die Be-

rechnungen das zusätzliche, konstante Volumen $V_t{}^*$ addiert werden. Damit können vom Schnecken oder Kolbenweg nicht erfasste Volumina berücksichtigt werden. Diese sind beispielsweise in einer Düse oder einem Heißkanalsystem vorhanden.

Für besonders hohe Genauigkeit und für besonders gute Detailbeobachtbarkeit eines Einspritzvorganges oder eines gesamten Produktionszyklus im Spritzgießprozess kann es zweckmäßig sein, das reale Füllvolumen $\Delta V_r$ über den gesamten Füllvorgang kontinuierlich zu ermitteln und/oder eine Einspritzbewegung zur Füllung der Kavität derart zu beeinflussen, dass ein vorgegebenes Volumenstromprofil abgefahren wird. Als Einspritzbewegung kann beispielsweise in der Einspritzphase eine Geschwindigkeitsbeeinflussung des Schneckenvorschubes stattfinden. In der Nachdruckphase kann beispielsweise eine Drucksteuerung oder eine Druckbeeinflussung des Nachdruckes zweckmäßig sein.

Das erfindungsgemäße Verfahren ermöglicht es, dass ein reales Umschalt-Füllvolumen $\Delta V_{rXfrL}$ in einem Lernzyklus L der Spritzgießmaschine ermittelbar ist, wobei in diesem Lernzyklus L bei Erreichen des realen Umschalt-Füllvolumens $\Delta V_{rXfrL}$ ein Umschalten auf die Nachdruckphase erfolgt. Ein solches reales Umschalt-Füllvolumen $\Delta V_{rXfrL}$ wird berechnet und gespeichert, sofern der Lernzyklus L ein Gutteil ergeben hat. Hierzu wird ein theoretisches Umschalt-Volumen $V_{tXfrL}$ und der zugehörige Umschaltdruck $p_{XfrL}$ zum Umschaltzeitpunkt im Lernprozess L gemessen.

Zusätzlich kann in dem Lernzyklus L ein theoretisches Referenzvolumen $V_{tRefL}$ an einem Referenzdruckwert $p_{Ref}$ ermittelt werden. Der Druck $p_{Ref}$ ist bevorzugt so gewählt, dass Anfahreffekte wie z. B. das Schließen einer Rückströmsperre oder dergleichen sicher ausgeblendet sind.

Aus den ermittelten Werten kann dann zweckmäßiger Weise das reale Umschalt-Füllvolumen $\Delta V_{rXfrL}$ im Lernzyklus L aus der Formel

$$\Delta V_{rXfrL} = \frac{V_{tRefL}}{1 - k(p_{Ref})} - \frac{V_{tXfrL}}{1 - k(p_{XfrL})}$$

ermittelt werden.

In einem Produktionszyklus P, der dem Lernzyklus L nachgeschaltet ist, wird am Referenzdruck $p_{Ref}$ ein theoretisches Referenzvolumen $V_{tRefP}$, ermittelt. Außerdem wird ein theoretisches Volumen $V_{tPC}$ im m Produktionszyklus P zu einem mitlaufenden Zeitpunkt $t_C$ ermittelt. Hieraus wird dann das reale Füllvolumen $\Delta V_{rP}$ zu einem Zeitpunkt $t_C$ im Produktionszyklus P aus der Formel

$$\Delta V_{rP} = \frac{V_{tRefP}}{1 - k(p_{Ref})} - \frac{V_{tPC}}{1 - k(p_{PC})}$$

Berechnet. Die Umschaltung auf die Nachdruckphase im Produktionszyklus P wird eingeleitet, wenn gilt:

$$\Delta V_{rP} \geq \Delta V_{rXfrL}.$$

Das Verfahren kann auch während einer druckgeregelten Nachdruckphase angewendet werden, wobei in der Nachdruckphase die Anpassung von Maschinenparametern zum Erreichen eines idealen realen Füllvolumens $\Delta V_{ri}$ durch Anpassung des Nachdruckes erfolgt.

Das Verbringen der spritzgießfähigen Masse in die zumindest eine Kavität eines Formwerkzeuges erfolgt beim erfindungsgemäßen Verfahren zweckmäßiger Weise mittels einer Schubschnecke oder einem Kolben.

Als spritzgießfähige Massen kommen beispielsweise Schmelzen von Thermoplasten oder duroplastische Formmassen oder Silikone oder Lacke in Frage.

Das erfindungsgemäße Verfahren kann positiv weitergebildet werden, wenn weitere Aktionen eines Spritzgießprozesses wie z. B. das Betätigen von Kernzügen, das Öffnen und Schließen von Kaskaden, welche spritzenweg-, das heißt spritzenvolumenabhängig oder zeitabhängig gesteuert werden in Abhängigkeit des Verfahrens gemäß dem ermittelten realen Füllvolumen $\Delta V_r$ gesteuert werden. Erfindungsgemäß können also nunmehr Maschinenaktionen, die im Stand der Technik nach theoretischen Größen wie z. B. dem Schneckenverfahrweg gesteuert werden, nunmehr nach dem realen Füllvolumen $\Delta V_r$ der Kavität ausgelöst werden, sodass eine erhöhte Genauigkeit und Reproduzierbarkeit dieser Aktionen erreichbar ist.

In einer weiteren bevorzugten Ausführungsform des erfindungsgemäßen Verfahrens werden zumindest die gelernten Werte für das reale Umschalt-Füllvolumen $\Delta V_{rXfrL}$ im Lernprozess L und der Referenzdruck $p_{Ref}$ von einer ersten Spritzgießmaschine zu einer zweiten baugleichen oder nicht baugleichen Spritzgießmaschine übertragen werden. Erfindungsgemäß wurde erkannt, dass es mit lediglich diesen beiden Werten in einfacher Art und Weise möglich ist, ohne aufwendiges Einfahren und Kalibrieren der zweiten Spritzgießmaschine, eine hohe Bauteilqualität bei einem Werkzeugumzug von einer Spritzgießmaschine zur anderen Spritzgießmaschine zu erreichen.

Im Folgenden wird die Erfindung anhand der Zeichnung beispielhaft näher erläutert. Es zeigen:

Figur 1a bis 1c: schematische Darstellungen von Unterschieden in einem eingebrachten Volumen an spritzgießfähiger Masse bei unterschiedlichen Druckniveaus (1000 bar und 500 bar);

Figuren 2a, 2b: stark schematisiert zwei Maschinenzustände A und B bei einem Schneckenweg $s_A$ und $s_B$;

Figuren 3a, 3b: je ein pvT-Diagramm von amorphen (Figur 3a) und teilkristallinen (Figur 3b) Thermoplasten (Quelle: Handbuch "Spritzgießen", Friedrich Johannaber, Walter Michaeli);

Figur 4: eine Kompressionskurve k(p) (adiabat) für einen thermoplastischen Kunststoff (PA6 GF30) ;

Figur 5: ein Vergleichsdiagramm eines Volumens bzw. eines Volumenstroms über der Zeit mit Kurvenverläufen gemäß dem Stand der Technik (Nichtberücksichtigung der Kompressibilität) und gemäß der Erfindung (Berücksichtigung der Kompressibilität, d. h. kompressionsbereinigt).

Die Figuren 1a bis 1c zeigen schematisch Darstellungen von Einspritzaggregaten 1 und stark schematisiert ein Schmelzevolumen $V_1$ von 100 cm$^3$ bei 1 bar (Umgebungsdruck). Dies ist ein Ausgangszustand.

In der Figur 1b ist in einem ersten Fall das Schmelzevolumen $V_1$ in einem Schneckenvorraum auf 60 cm$^3$ verringert und steht unter einem Druck von 1000 bar. Ein zweites Volumen $V_2$ befindet sich in einer nicht dargestellten Kavität eines Formwerkzeuges.

In der rechten Darstellung gemäß Figur 1b ist ein Zustand gezeigt, bei dem das Schmelzevolumen $V_1$' 60 cm$^3$ beträgt und unter einem Druck von 500 bar steht.

In der Figur 1c ist in der linken Darstellung der Zustand nach Figur 1b (links) dargestellt, nachdem der Zustand gemäß Figur 1b (links) auf Umgebungsdruck entspannt worden ist. Das Volumen $V_1$' ändert sich zu 63,1 cm$^3$ und liegt bei 1 bar Umgebungsdruck vor. Das Volumen $V_2$ in der linken Darstellung der Figur 1 beträgt 36,9 cm$^3$ im entspannten Zustand. Das Volumen $V_2$ gemäß rechter Darstellung in Figur 1c beträgt 38,5 cm$^3$. Dies bedeutet, dass im rechts dargestellten Fall gemäß den Figuren 1a, 1b, 1c deutlich weniger (1,6 cm$^3$ weniger) spritzgießfähige Masse eingebracht wurde.

Die beiden Fälle die in den Figuren 1a, 1b, 1c parallel nebeneinander gezeigt wurden, stellen den Stand der Technik dar, der bislang nicht vorsieht, das Volumen der Formmasse, welches in eine Kavität einer Spritzgießform eingebracht wird, zu messen oder zu regeln, derart, dass die Kompressibilität berücksichtigt ist. Bei einer derartigen Vorgehensweise gemäß dem Stand der Technik ist ein unterschiedlich großes Volumen $V_2$ zu erwarten, wenn die spritzgießfähige Masse entspannt ist und während des Spritzgießvorganges unterschiedlich hohe Drücke geherrscht haben. Dies bedeutet, dass falls - wie im Stand der Technik praktiziert - eine Spritzgießmaschine volumengesteuert oder äquivalent dazu nach dem Schneckenweg gesteuert betrieben wird und so bei einem bestimmten theoretischen Volumen $V_t$ oder bei einem bestimmten Schneckenweg der Einspritzvorgang beendet wird, werden bei unterschiedlichen Drücken unterschiedliche Formteilmassen in die Kavität eingebracht.

Derartige Druckunterschiede treten aber in der Realität aufgrund von Temperaturschwankungen und Viskositätsänderungen des Materials/Granulats/der spritzgießfähigen Masse auf und beeinflussen damit die Bauteilqualität und die Gewichtskonstanz nachteilig. Aufbauend auf diese Erkenntnis wird nunmehr nachfolgend die Erfindung erläutert.

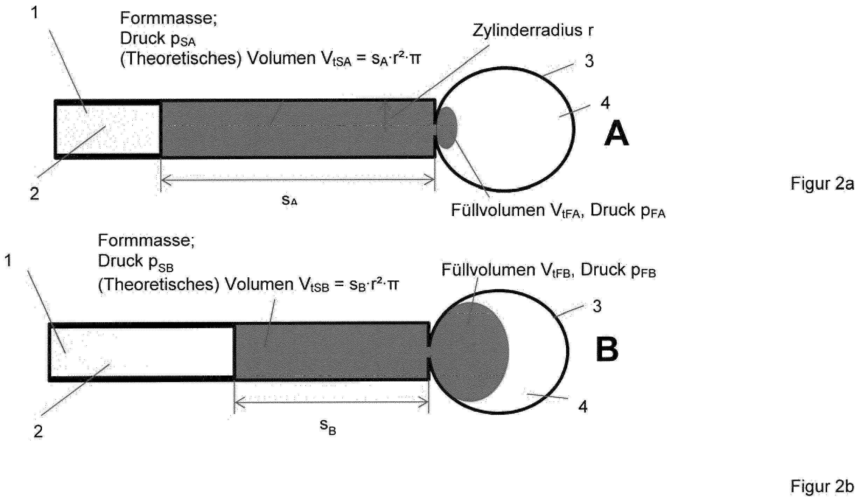

Kern der Erfindung ist ein Verfahren zur kompressionsbereinigten Bestimmung eines Kunststoff-Volumens $V_r$. In anderen Worten bedeutet dies, dass das Verbringen eines Volumen $V_r$ in eine Kavität unter Berücksichtigung der Kompressibilität der spritzgießfähigen Masse stattfindet. In der Einspritzeinheit 1 befindet sich schematisiert (vergleiche Figuren 2a, 2b) eine Schneckeneinheit 2 welche gegebenenfalls mit einer Rückströmsperre ausgestattet ist.

Alternativ kann die Schneckeneinheit 2 auch als Kolben ausgebildet sein.

Vor der Schneckeneinheit 2 befindet sich spritzgießfähige Formmasse, z. B. eine Kunststoffschmelze oder eine duroplastische spritzgießfähige Formmasse. Diese Formmasse steht unter einem Druck $p_{SA}$ wenn sich die Schneckeneinheit 2 an einer Position A befindet. Die Schnecke befindet sich dann an der Position des Schneckenweges $s_A$. Dies entspricht einem theoretischen Volumen im Schneckenvorraum $V_{tSA}$. Schematisiert dargestellt sind auch ein Spritzgießwerkzeug 3 mit einer Kavität 4. Weiterhin schematisch ist theoretisches Volumen $V_{tFA}$ (an der Schneckenposition $s_A$) dargestellt, welches sich unter einem Forminnendruck $p_{FA}$ bereits in der Kavität 4 befindet.

Figur 2b zeigt einen späteren Zustand. Der Schneckenweg $s_B$ ist kleiner als der Schneckenweg $s_A$. Die Schneckeneinheit 2 hat somit einen Teil der Formmasse in die Kavität 4 des Formwerkzeugs 3 befördert. In der Formmasse der Einspritzeinheit 1, insbesondere im Schneckenvorraum herrscht ein Druck $p_{SB}$. In der Kavität 4 befindet sich ein theoretisches Füllvolumen $V_{tFB}$ unter dem Druck $p_{FB}$.

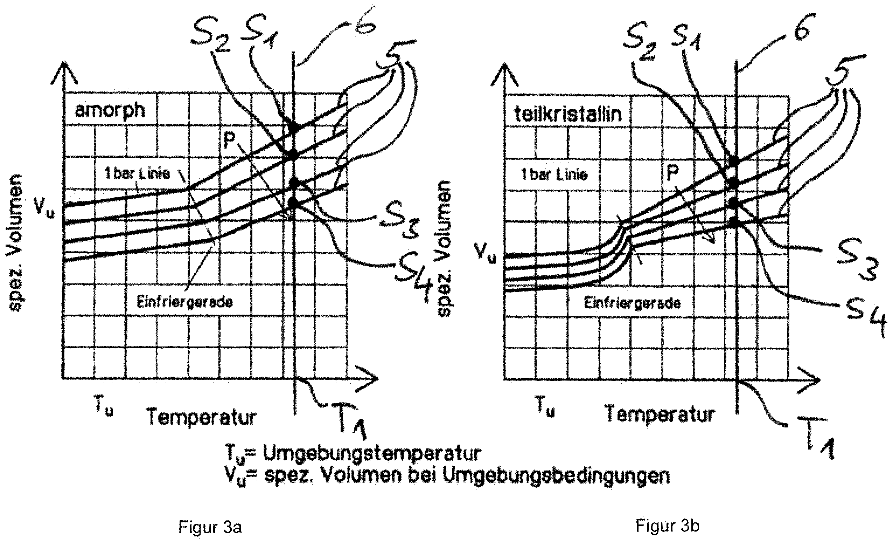

Mit diesen Angaben kann nun das reale Füllvolumen $\Delta V_r$ wie folgt bestimmt werden. Das Volumen $V_{tSA}$ im Schneckenvorraum kann über ein Wegmesssystem der Schnecke gemessen werden und wird in einer Maschinensteuerung angezeigt. Aus der Differenz des Schneckenweges $s_A$-$s_B$ kann damit auch - einen vernachlässigbaren Rückfluss in der Rückströmsperre oder am Kolben vorausgesetzt - ein zwischen zwei Positionen A und B in die Form eingebrachte theoretische Füllvolumen $V_{tSA}$-$V_{tSB}$ ermittelt werden. Mit Hilfe einer zu dem jeweiligen Formmassenmaterial vorliegenden Kompressionskurve k(p), die in einer Maschinensteuerung abgelegt ist, kann nunmehr eine Änderung des spezifischen Volumens berücksichtigt werden. Der Kompressionskurve k(p) liegen Werte zugrunde, die die Kompressibilität des vorliegenden Materials, also eine Änderung des spezifischen Volumens $V_U$ angibt. Diese Kompressionskurven k(p) können für den einen isothermen Fall aus einem pvT-Diagramm (vgl. Figuren 3a, 3b) ermittelt werden, indem eine Änderung des spezifischen Volumens $V_U$ an Schnittpunkten S1-S4 von Drucklinien 5 mit einer Temperaturvertikalen 6 bezogen auf das spezifische Volumen $V_U$ beim Umgebungsdruck berechnet wird.

Derartige Drucklinien 5 sind beispielsweise in den Diagrammen gemäß Figuren 3a, 3b für ein amorphes (Figur 3a) und teilkristallines Material (Figur 3b) angegeben. Bei einer bestimmten Temperatur $T_1$ ergeben sich mit steigendem Druck p abnehmende, spezifische Volumina $V_U$ des Formmassenmaterials. Beispielhaft hierfür sind in den Figuren 3a, 3b Schnittpunkte $S_1$, $S_2$, $S_3$ und $S_4$ angegeben. Der Schnittpunkt $S_1$ gibt beispielsweise das spezifische Volumen $V_U$ eines amorphen Materials an, wenn dieses unter Umgebungsdruck (1 bar) vorliegt. Dies Schnittpunkte $S_2$, $S_3$ und $S_4$ in der Figur 3a geben spezifische Volumina $V_U$ bei höheren Drücken an.

Die Figur 3b zeigt Drucklinien 5 eines teilkristallinen Materials. Die Schnittpunkte $S_1$ bis $S_4$ liegen auf der Temperaturvertikalen 6, die zu einer bestimmten Temperatur $T_1$ gehört.

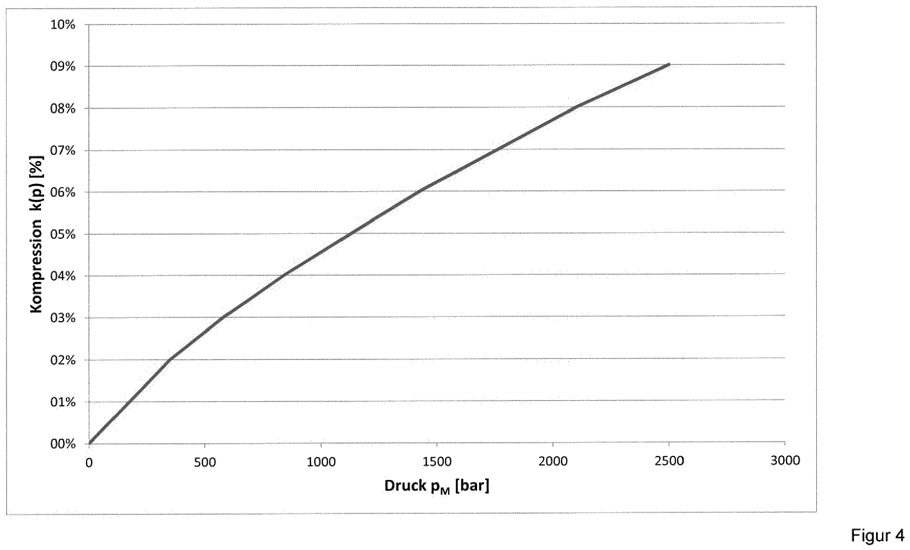

Eine andere (adiabate) Kompressionskurve k(p) zeigt Figur 4. Eine solche adiabate Kompressionskurve k(p) ist für den Spritzgießprozess bevorzugt. Figur 4 zeigt in Abhängigkeit eines Druckes, insbesondere des Formmassendruckes $p_M$ eine zugehörige Kompression (k(p)) in Prozent. Wertepaare p und k(p), die diese Kurve bilden, sind in der Maschinensteuerung abgelegt. Die Kompressionskurve gemäß Figur 4 zeigt beispielhaft einen Verlauf für ein spritzgießfähiges Material PA6GF30. Um nunmehr das reale Volumen $V_{rA}$ zu einem Zeitpunkt A ermitteln zu können, kann in Kenntnis der Kompressionskurve k(p) des verwendeten Materials nachfolgende Gleichung angegeben werden:

$$V_{rA} = \frac{V_{tSA}}{1 - k(p_{SA})} = \frac{s_A \cdot r^2 \cdot \pi}{1 - k(p_{SA})}$$

Das zwischen zwei Zeitpunkten oder Positionen A und B eingebrachte reale Füllvolumen $\Delta V_r$ kann nun durch folgende Gleichung angegeben werden:

$$\Delta V_r = \frac{V_{tFB}}{1-k(p_{FB})} - \frac{V_{tFA}}{1-k(p_{FA})} = \frac{s_A \cdot r^2 \cdot \pi}{1-k(p_{SA})} - \frac{s_B \cdot r^2 \cdot \pi}{1-k(p_{SB})},$$

wobei $V_{tFA}$ und $V_{tFB}$ theoretische Volumina an den Zeitpunkten oder Positionen A und B, $k(p_{FB})$ und $k(p_{FA})$ die Kompressibilität der Formmasse bei einem Druck p an der Stelle A und an der Stelle B ist,

$s_A$ und $s_B$ Schneckenwege an den Positonen A und B sind und $k(p_{SA})$ und $k(p_{SB})$ Kompressibilitäten der Formmasse bei einem Schneckenvorraumdruck an der Position A bzw. B sind.

Die Drücke $p_F$ geben einen Forminnendruck an. Die Drücke $p_S$ geben beispielsweise einen Druck in der Formmasse im Schneckenvorraum an. Beide Varianten sind mögliche Druckarten, die geeignet sind, als Massedruck $p_M$ verwendet zu werden.

Auf der Basis dieser Berechnung kann auch ein kompressionsbereinigter, das heißt ein realer Füllvolumenstrom $\Delta \dot{V}_r$ zwischen den Positionen A, B angegeben werden. Hierzu eignet sich beispielsweise nachfolgende Gleichung:

$$\Delta \dot{V}_r = \frac{\Delta V_r}{t_B - t_A}.$$

Der reale Volumenstrom $\Delta \dot{V}_r$ kann zweckmäßiger Weise als Ableitung des realen Füllvolumens $\Delta V_r$ über der Zeit t ermittelt werden.

Verschiedene Werte A, B für den Massedruck $p_M$ an den Positionen A, B können über maschineninterne Messeinrichtungen, z. B. Kraftaufnehmer oder über den Hydraulikdruck der Maschine, direkte und/oder indirekte Schmelzedrucksensoren oder andere Messeinrichtung zur Erfassung des Druckes der Formmasse im Zylinder gemessen werden. Die Drücke in der Form können über Werkzeuginnendrucksensoren oder andere Messeinrichtungen zur Erfassung des Druckes der Formmasse in der Form gemessen werden.

Eine erfindungsgemäße Berücksichtigung der Kompression k(p) des verwendeten Formmateriales ermöglicht es somit, das reale Füllvolumen $\Delta V_r$ und/oder einen realen Füllvolumenstrom $\Delta \dot{V}_r$ über den gesamten Füllvorgang der Kavität 4 zu jedem Zeitpunkt und/oder kontinuierlich und/oder zu bestimmten Zeitpunkten zu ermitteln. Somit kann nunmehr das reale Füllvolumen $\Delta V_r$ oder der reale Volumenstrom $\Delta \dot{V}_r$ mit geeigneten, an der Maschine vorhandenen regelungstechnischen Einrichtungen für die Einspritzbewegung beeinflusst werden, so dass ein vorgegebenes Volumenstromprofil abgefahren wird oder abgefahren werden kann.

Des Weiteren ermöglicht das erfindungsgemäße Verfahren nunmehr auch das Beeinflussen weiterer Prozessaktionen eines Spritzgießprozesses, welche bislang abhängig vom Schnecken- und/oder Kolbenweg bzw. dem Volumen oder auch der Geschwindigkeit oder dem Volumenstrom gesteuert werden können, nunmehr auch über das kompressionsbereinigte reale Füllvolumen $\Delta V_r$ oder den realen Füllvolumenstrom $\Delta \dot{V}_r$. Derartige Aktionen, wie z. B. Kaskadensteuerungen, Präge- und/oder Geschwindigkeitsprofile können mit dem erfindungsgemäßen Verfahren vorteilhafter Weise bei identischer Formfüllung, also unabhängig von Viskositätsschwankungen ausgelöst werden.

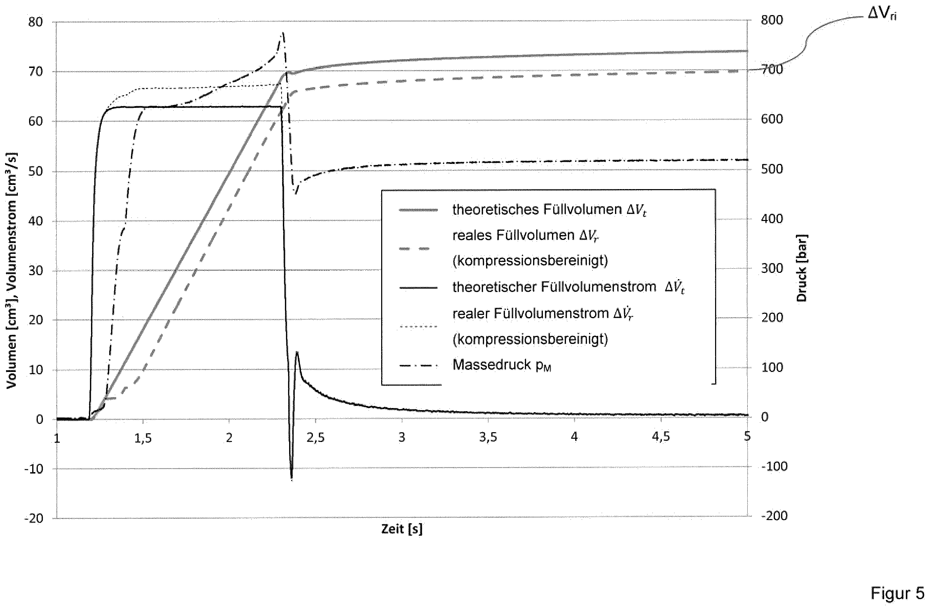

Figur 5 zeigt einen Vergleich verschiedener charakteristischer Kurven eines Spritzgießprozesses wenn ein solcher Spritzgießprozess unter Anwendung des erfindungsgemäßen Verfahrens durchgeführt wird im Vergleich zu einem Spritzgießprozess nach dem Stand der Technik.

Ein Vergleich der Kurvenverläufe für das theoretische Füllvolumen $\Delta V_t$ und für das reale Füllvolumen $\Delta V_r$ welches kompressionsbereinigt ist, zeigt, dass zum Zeitpunkt des Umschaltpunktes das theoretische Füllvolumen $\Delta V_t$ bereits ein Nennfüllvolumen der Kavität (hier 70 cm$^3$) erreicht hat und am Ende des Spritzgusszyklus dieses sogar übertrifft. Dem gegenüber erreicht das reale Füllvolumen $\Delta V_r$ erst am Ende der Nachdruckphase das Nennvolumen der Kavität von 70 cm$^3$, was der Realität entspricht. Das theoretische Füllvolumen $\Delta V_t$, welches am Ende der Nachdruckphase größer ist als das Nennvolumen der Kavität gibt somit eine in der Realität nicht nachvollziehbare Größe wieder. Das Nennvolumen der Kavität entspricht im Zusammenhang des vorliegenden Verfahrens dem idealen realen Füllvolumen $\Delta V_{ri}$, welches es zu erreichen gilt.

Im Bereich bis zum Umschaltpunkt ist zudem die Kurve für den realen Füllvolumenstrom $\Delta \dot{V}_r$ oberhalb der Kurve für den theoretischen Volumenstrom $\Delta \dot{V}_t$ angeordnet. Erst ab der Nachdruckphase verlaufen diese Kurven in etwa deckungsgleich.

**Bezugszeichenliste**

| | |
|---|---|
| $V_t$ | theoretisches Volumen |
| $t$ | Zeit |
| $p_M$ | Massedruck |
| $p_s$ | Druck im Schneckenvorraum |
| $p_F$ | Forminnendruck |
| $k(p)$ | Kompression, Kompressionskurve |
| $\Delta V_r$ | Reales Füllvolumen |
| $\Delta V_{rR}$ | Referenzkurve reales Füllvolumen |
| $\Delta V_{ri}$ | Ideales reales Füllvolumen |
| $t_A, t_B, t_C$ | Zeitpunkte |
| $S_A, S_B$ | Schneckenweg |
| $V_{tSA}, V_{tFA}$ | Theoretisches Volumen in der Spritzeinheit (S) und der Form (F) an der Position A |
| $V_{tSB}, V_{tFB}$ | Theoretisches Volumen in der Spritzeinheit (S) und der Form (F) an der Position B |
| $V_{tB}$ | Theoretisches Volumen an der Position B |
| $A, B$ | Werte, Positionen |
| $\Delta \dot{V}_r$ | Realer Volumenstrom |
| $\Delta \dot{V}_{rR}$ | Referenzkurve realer Volumenstrom |
| $v_S$ | Schnecken- bzw. Kolbengeschwindigkeit |
| $\Delta V_{rXfrL}$ | Reales Umschalt-Füllvolumen im Lernzyklus |
| $V_{tRefL}$ | Theoretisches Referenzvolumen im Lernzyklus |
| $p_{Ref}$ | Referenzdruckwert |
| $V_{tRefP}$ | Theoretisches Referenzvolumen im Produktionszyklus |
| $\Delta V_{rP}$ | Reales Füllvolumen im Produktionszyklus |
| $L$ | Lernzyklus |
| $P$ | Produktionszyklus |
| $S1-S4$ | Schnittpunkte |

$V_U$           spezifisches Volumen
$V_1$           Schmelzevolumen
$V_1'$         komprimiertes Volumen
$V_2$           zweites Volumen

Position A

Position B

1     Einspritzeinheit
2     Schneckeneinheit
3     Spritzgießwerkzeug
4     Kavität
5     Drucklinie
6     Temperaturvertikale

**Patentansprüche**

1. Verfahren zur Bestimmung eines realen Volumens $V_r$ einer spritzgießfähigen Masse während eines Spritzgießprozesses, wobei die spritzgießfähige Masse in zumindest eine Kavität eines Formwerkzeuges verbracht wird, aufweisend die Schritte:

   a) Ermittlung eines theoretischen Volumens $V_t$ aus Prozessgrößen zumindest während einer Füllphase des Spritzgießprozesses,
   b) Ermittlung und/oder Messung zumindest eines Wertes für zumindest einen Massedruck $p_M$,
   **gekennzeichnet durch** die Schritte
   c) Auswahl einer dem Wert von $p_M$ entsprechenden materialspezifischen Kompression k(p) der spritzgießfähigen Masse,
   d) Berechnung eines realen Volumens $V_r$ unter Berücksichtigung der Kompression k(p).

2. Verfahren nach Anspruch 1, **dadurch gekennzeichnet, dass** die Anpassung von Maschinenparametern der Spritzgießmaschine zum Erreichen eines idealen realen Füllvolumens $\Delta V_{ri}$ der zumindest einen Kavität erfolgt.

3. Verfahren nach Anspruch 1 oder 2, **dadurch gekennzeichnet, dass** die Auswahl der materialspezifischen Kompression k(p) der spritzgießfähigen Masse aus einer in einer Maschinensteuerung hinterlegten materialspezifischen Kompressionskurve, insbesondere aus einer in der Maschinensteuerung hinterlegten adiabaten Kompressionskurve k(p) erfolgt.

4. Verfahren nach einem der vorangegangenen Ansprüche, **dadurch gekennzeichnet, dass** als Massedruck ($p_M$) ein Massedruck beispielsweise in einem Zylinder oder ein Forminnendruck der Formmasse ($p_F$) oder ein Formmassendruck im Schneckenvorraum ($p_S$) verwendet wird und zumindest zwei Werte (A) und (B) des Massedruckes ($p_M$; $p_F$; $p_S$) während eines definierten Prozessfensters ermittelt und/oder gemessen werden.

5. Verfahren nach einem der vorangegangenen Ansprüche, **dadurch gekennzeichnet, dass** diejenigen zwei Werte (A) und/oder (B) Mittelwerte über mehrere einzelne Messwerte sind.

6. Verfahren nach einem der vorangegangenen Ansprüche, **dadurch gekennzeichnet, dass** die Berechnung des realen Füllvolumens ($\Delta V_r$), welches einem drucklosen in die Form eingebrachten Volumen zwischen den Werten (A) und (B) entspricht, nach der Formel:

$$\Delta V_r = \frac{V_{tFB}}{1 - k(p_{FB})} - \frac{V_{tFA}}{1 - k(p_{FA})} = \frac{V_{tSA}}{1 - k(p_{SA})} - \frac{V_{tSB}}{1 - k(p_{SB})}$$

ermittelt wird.

7. Verfahren nach einem der vorangegangenen Ansprüche, **dadurch gekennzeichnet, dass** bei der Berechnung des realen Füllvolumens ($\Delta V_r$) zu jedem gemessenen theoretischen Volumen $V_t$ ein konstantes theoretisches Volumen $V_t^*$ addiert wird.

8. Verfahren nach einem der vorangegangenen Ansprüche, **dadurch gekennzeichnet, dass** ein realer Volumenstrom ($\Delta\dot{V}_r$) durch Ableitung des realen Füllvolumens $\Delta V_r$ oder des realen Volumens $V_r$ über der Zeit, z. B. aus der Gleichung

$$\Delta\dot{V}_r = \frac{\Delta Vr}{t_B - t_A}$$

ermittelt wird.

9. Verfahren nach einem der vorangegangenen Ansprüche, **dadurch gekennzeichnet, dass** zur Ermittlung des realen Volumenstroms ($\Delta\dot{V}_r$) anstelle der Zeitpunkte ($t_B$) und ($t_A$) eine Schneckengeschwindigkeit ($v_S$) verwendet wird.

10. Verfahren nach einem der vorangegangenen Ansprüche, **dadurch gekennzeichnet, dass** das reale Füllvolumen $\Delta V_r$ und/oder der reale Volumenstrom $\Delta\dot{V}_r$ über den gesamten Füllvorgang kontinuierlich ermittelt wird und/oder eine Einspritzbewegung zur Füllung der Kavität (4) derart beeinflusst wird, dass ein vorgegebenes reales Volumenstromprofil abgefahren wird.

11. Verfahren nach einem der vorangegangenen Ansprüche, **dadurch gekennzeichnet, dass** das reale Füllvolumen $\Delta V_r$ und/oder der reale Volumenstrom $\Delta\dot{V}_r$ während der Füllphase mit einer Referenzkurve eines realen Füllvolumens $\Delta V_{rR}$ und/oder eines realen Volumenstroms $\Delta\dot{V}_{rR}$ verglichen wird.

12. Verfahren nach einem der vorangegangenen Ansprüche, **dadurch gekennzeichnet, dass** mit Hilfe des Verfahrens nach einem der vorangegangen Ansprüche ein theoretisches Umschaltvolumen ($V_{tXfrL}$) in einem Lernzyklus (L) ermittelt wird, wobei im Lernzyklus (L) bei Erreichen dieses theoretisches Umschaltvolumen ($V_{tXfrL}$) ein Umschalten auf die Nachdruckphase erfolgt.

13. Verfahren nach einem der vorangegangenen Ansprüche, **dadurch gekennzeichnet, dass** in dem Lernzyklus (L) ein theoretisches Referenzvolumen ($V_{tRefL}$) an einem Referenz-Druckwert ($p_{Ref}$) ermittelt wird.

14. Verfahren nach einem der vorangegangenen Ansprüche, **dadurch gekennzeichnet, dass** in einem Produktionszyklus (P) der dem Lernzyklus (L) nachgeschaltet ist ein theoretisches Referenzvolumen ($V_{tRefP}$) an demselben Referenz-Druckwert ($p_{Ref}$) ermittelt wird.

15. Verfahren nach einem der vorangegangenen Ansprüche, **dadurch gekennzeichnet, dass** das reale Umschalt-Füllvolumen ($\Delta V_{rXfrL}$) im Lernzyklus L aus

$$\Delta V_{rXfrL} = \frac{V_{tRefL}}{1 - k(p_{Ref})} - \frac{V_{tXfrL}}{1 - k(p_{XfrL})}$$

ermittelt wird, wobei der Zeitpunkt $t_A$ das Erreichen des Referenzdruckes $p_{Ref}$ und der Zeitpunkt $t_B$ der Umschaltpunkt ist und das reale Füllvolumen $\Delta V_{rP}$ zu einem Zeitpunkt $t_C$ im Produktionszyklus (P) aus

$$\Delta V_{rP} = \frac{V_{tRefP}}{1 - k(p_{Ref})} - \frac{V_{tPC}}{1 - k(p_{PC})}$$

berechnet wird und die Umschaltung auf die Nachdruckphase im Produktionszyklus (P) eingeleitet wird, wenn

$$\Delta V_{rP} \geq \Delta V_{rXfrL}.$$

16. Verfahren nach einem der vorangegangenen Ansprüche, **dadurch gekennzeichnet, dass** das Verfahren während einer druckgeregelten Nachdruckphase angewandt wird, wobei in der Nachdruckphase die Anpassung von Maschinenparametern zum Erreichen eines idealen realen Füllvolumens $\Delta V_{ri}$ durch Anpassung des Nachdruckes erfolgt.

17. Verfahren nach einem der vorangegangenen Ansprüche, **dadurch gekennzeichnet, dass** das Verbringen der spritzgießfähigen Masse in die zumindest eine Kavität (4) eines Formwerkzeuges (3) mittels einer Schubschnecke oder einem Kolben erfolgt.

18. Verfahren nach einem der vorangegangenen Ansprüche, **dadurch gekennzeichnet, dass** die spritzgießfähigen Massen Schmelzen von Thermoplasten oder duroplastische Formmassen oder Silikone oder Lacke sind.

19. Verfahren nach einem der vorangegangenen Ansprüche, **dadurch gekennzeichnet, dass** weitere Aktionen eines Spritzgießprozesses, wie z. B. das Betätigen von Kernzügen, das Öffnen und Schließen von Kaskaden, welche spritzenweg-, das heißt spritzenvolumenabhängig oder zeitabhängig gesteuert werden, in Abhängigkeit des Verfahrens gemäß ermittelten realen Füllvolumens $\Delta V_r$ gesteuert werden.

20. Verfahren nach einem der vorangegangenen Ansprüche, **dadurch gekennzeichnet, dass** zumindest die gelernten Werte für das reale Umschalt-Füllvolumen ($\Delta V_{rXfrL}$) und der Referenzdruck ($p_{Ref}$) von einer ersten Spritzgießmaschine zu einer zweiten - baugleichen oder nicht baugleichen - Spritzgießmaschine übertragen werden.

**Claims**

1. A method for determining an actual volume $V_r$ of an injection-moldable compound during an injection molding process, wherein the injection-moldable compound is introduced into at least one cavity of a mold, having the steps:

   a) determining a theoretical volume $V_t$ from process variables at least during a filling phase of the injection molding process,
   b) determining and/or measuring at least one value for at least one compound pressure $p_M$,
   **characterized by** the steps
   c) selecting a material-specific compression k(p), corresponding to the value of $p_M$ of the injection-moldable compound, and
   d) calculating an actual volume $V_r$ by taking into account the compression k(p).

2. The method according to claim 1, **characterized in that** the adaptation of machine parameters of the injection molding machine occurs in order to reach an ideal actual filling volume $\Delta V_{ri}$ of the at least one cavity.

3. The method according to claim 1 or 2, **characterized in that** the selection of the material-specific compression k(p) of the injection-pourable compound occurs from a material-specific compression curve, which is stored in a machine controller, in particular from an adiabatic compression curve k(p) stored in the machine controller.

4. The method according to one of the preceding claims, **characterized in that** a compound pressure is used as compound pressure ($p_M$), for example in a cylinder or an internal mold pressure of the molding compound ($p_F$) or a molding compound pressure in the screw antechamber ($p_s$) and at least two values (A) and (B) of the compound pressure ($p_M$; $p_F$; $p_s$) are determined and/or measured during a defined process window.

5. The method according to one of the preceding claims, **characterized in that** those two values (A) and/or (B) are average values relating to plurality of individual measuring values.

6. The method according to one of the preceding claims, **characterized in that** the calculation of the actual filling volume ($\Delta V_r$), which corresponds to a volume, which is introduced into the mold without pressure, between the values (A) and (B), is determined according to the formula:

$$\Delta V_r = \frac{V_{tFB}}{1-k(p_{FB})} - \frac{V_{tFA}}{1-k(p_{FA})} = \frac{s_A \cdot r^2 \cdot \pi}{1-k(p_{SA})} - \frac{s_B \cdot r^2 \cdot \pi}{1-k(p_{SB})},$$

7. The method according to one of the preceding claims, **characterized in that** a constant theoretical volume $V_t^*$ is added to every measured theoretical volume $V_t$ in response to the calculation of the actual filling volume ($\Delta V_r$).

8. The method according to one of the preceding claims, **characterized in that** an actual volume flow ($\Delta \dot{V}_r$) can be determined by deriving the actual filling volume $\Delta V_r$ or the actual volume Vr over the time, e.g. from the formula

$$\Delta \dot{V}_r = \frac{\Delta Vr}{t_B - t_A}.$$

9. The method according to one of the preceding claims, **characterized in that** instead of the points in time ($t_B$) and ($t_A$), a screw speed ($v_S$) is used to determine the actual filling volume flow ($\Delta \dot{V}_r$).

10. The method according to one of the preceding claims, **characterized in that** the actual filling volume $\Delta V_r$ and/or the actual filling volume flow $\Delta \dot{V}_r$ is determined continuously during the entire filling process and/or an injection movement for filling the cavity (4) is influenced in such a way that a predetermined actual volume flow profile is employed.

11. The method according to one of the preceding claims, **characterized in that** the actual filling volume $\Delta V_r$ and/or the actual volume flow $\Delta \dot{V}_r$ is compared during the filling phase to a reference curve of an actual filling volume $\Delta V_{rR}$ and/or of an actual volume flow $\Delta \dot{V}_{rR}$.

12. The method according to one of the preceding claims, **characterized in that** with the help of the method according to one of the preceding claims, a theoretical switch-over filling volume ($V_{tXfrL}$) is determined in a learning cycle (L), wherein a switch-over to the holding pressure phase occurs in the learning cycle (L) when reaching this theoretical switch-over volume ($V_{tXfrL}$).

13. The method according to one of the preceding claims, **characterized in that** a theoretical reference volume ($V_{tRefL}$) is determined at a reference pressure value ($p_{Ref}$) in the learning cycle (L).

14. The method according to one of the preceding claims, **characterized in that** in a production cycle (P) downstream from the learning cycle (L), a theoretical reference volume ($V_{tRefP}$) is determined at the same reference pressure value ($p_{Ref}$).

15. The method according to one of the preceding claims, **characterized in that** the actual switch-over filling volume ($\Delta V_{rXfrL}$) in the learning cycle L is determined from

$$\Delta V_{rXfrL} = \frac{V_{tRefL}}{1 - k(p_{Ref})} - \frac{V_{tXfrL}}{1 - k(p_{XfrL})}$$

wherein the point in time $t_A$ is the reaching of the reference pressure $p_{Ref}$ and the point in time $t_B$ is the switch-over point and the actual filling volume $\Delta_{rP}$ is calculated at a point in time $t_C$ in the production cycle (P) from

$$\Delta V_{rP} = \frac{V_{tRefP}}{1 - k(p_{Ref})} - \frac{V_{tPC}}{1 - k(p_{PC})}$$

and the switch-over to the holding pressure phase is initiated in the production cycle (P), when

$$\Delta V_{rP} \geq \Delta V_{rXfrL}.$$

16. The method according to one of the preceding claims, **characterized in that** the method is used during a pressure-regulated holding pressure phase, wherein the adaption of machine parameters occurs in the holding pressure phase to reach an ideal actual filling volume $\Delta V_{ri}$ by adapting the holding pressure.

17. The method according to one of the preceding claims, **characterized in that** the movement of the injection-moldable compound into the at least one cavity (4) of a mold (3) occurs by means of a reciprocating screw or a piston.

18. The method according to one of the preceding claims, **characterized in that** the injection-moldable compounds are melts of thermoplastics or thermosetting molding compounds or silicones or varnishes.

19. The method according to one of the preceding claims, **characterized in that** further actions of an injection molding process, such as, e.g., the control of core pullers, the opening and closing of cascades, which are controlled as a function of the injection path, i.e. as a function of the injection volume or as a function of time, are controlled as a function of the displacement according to the determined actual filling volume $\Delta V_r$.

20. The method according to one of the preceding claims, **characterized in that** at least the learned values for the actual switch-over filling volume ($\Delta_{rXfrL}$) and the reference pressure ($p_{Ref}$) is transferred from a first injection molding machine to a second - constructionally identical or not constructionally identical - injection molding machine.

## Revendications

1. Procédé en vue de la détermination d'un volume réel $V_r$ d'une masse pouvant être moulée par injection pendant un procédé de moulage par injection, dans lequel la masse pouvant être moulée par injection est placée dans au moins une cavité d'un moule, présentant les étapes :

   a) de calcul d'un volume théorique $V_t$ à partir de grandeurs de procédé au moins pendant une phase de remplissage du procédé de moulage par injection,
   b) de calcul et/ou mesure d'au moins une valeur pour au moins une pression massique $p_M$,
   **caractérisé par** les étapes
   c) de sélection d'une compression k(p) spécifique au matériau correspondant à la valeur de $p_M$, de la masse pouvant être moulée par injection,
   d) de calcul d'un volume réel $V_r$ en tenant compte de la compression k(p).

2. Procédé selon la revendication 1, **caractérisé en ce que** l'adaptation des paramètres de machine de la machine de moulage par injection est effectuée pour atteindre un volume de remplissage réel idéal $\Delta V_{ri}$ de l'au moins une cavité.

3. Procédé selon la revendication 1 ou 2, **caractérisé en ce que** la sélection de la compression k(p) spécifique au matériau de la masse pouvant être moulée par injection est effectuée à partir d'une courbe de compression spécifique au matériau figurant dans la commande de machine, en particulier à partir d'une courbe de compression k(p) adiabatique figurant dans la commande de machine.

4. Procédé selon l'une des revendications précédentes, **caractérisé en ce qu'**en tant que pression massique ($p_M$), on emploie une pression massique par exemple dans un cylindre ou une pression intérieure de moule de la masse de moulage ($p_F$) ou une pression de masse de moulage dans la chambre d'entrée de la vis sans fin ($p_S$) et au moins deux valeurs (A) et (B) de la pression massique ($p_M$ ; $p_F$ ; $p_S$) sont déterminées et/ou mesurées pendant une fenêtre de procédé définie.

5. Procédé selon l'une des revendications précédentes, **caractérisé en ce que** les deux valeurs (A) et/ou (B) sont des valeurs moyennes sur plusieurs valeurs de mesure individuelles.

6. Procédé selon l'une des revendications précédentes, **caractérisé en ce que** le calcul du volume de remplissage réel idéal ($\Delta V_r$) qui correspond à un volume entre les valeurs (A) et (B) sans pression intégré dans le moule est déterminé par la formule suivante :

$$\Delta V_r = \frac{V_{tFB}}{1 - k(p_{FB})} - \frac{V_{tFA}}{1 - k(p_{FA})} = \frac{V_{tSA}}{1 - k(p_{SA})} - \frac{V_{tSB}}{1 - k(p_{SB})}$$

.

7. Procédé selon l'une des revendications précédentes, **caractérisé en ce que** lors du calcul du volume de remplissage réel ($\Delta V_r$), un volume théorique constant $V_t^*$ est ajouté à chaque volume $V_t$ théorique mesuré.

8. Procédé selon l'une des revendications précédentes, **caractérisé en ce qu'**un débit volumique réel ($\Delta \dot{V}_r$) est déterminé par déduction du volume de remplissage réel $\Delta v_r$ ou du volume réel $V_r$ sur la durée, par exemple à partir de l'équation :

$$\Delta \dot{V}_r = \frac{\Delta Vr}{t_B - t_A}$$

.

9. Procédé selon l'une des revendications précédentes, **caractérisé en ce que** pour déterminer le débit volumique réel ($\Delta \dot{V}_r$), on emploie une vitesse de vis sans fin ($v_S$) à la place des temps ($t_B$) et ($t_A$).

10. Procédé selon l'une des revendications précédentes, **caractérisé en ce que** le volume de remplissage réel $\Delta V_r$ et/ou le débit volumique réel $A \dot{V}_r$ est déterminé en continu durant toute l'opération de remplissage et/ou un mouvement d'injection pour remplir la cavité (4) est influencé de façon à ce qu'un profil de débit volumique réel prédéfini soit démarré.

11. Procédé selon l'une des revendications précédentes, **caractérisé en ce que** le volume de remplissage réel $\Delta V_r$ et/ou le débit volumique réel $\Delta \dot{V}_r$ est comparé durant la phase de remplissage à une courbe de référence d'un volume de remplissage réel $\Delta V_{rR}$ et/ou un débit volumique réel $\Delta \dot{V}_{rR}$.

12. Procédé selon l'une des revendications précédentes, **caractérisé en ce qu'**à l'aide du procédé selon l'une des revendications précédentes, un volume de commutation théorique ($V_{tXfrL}$) est déterminé dans un cycle d'apprentissage (L), dans lequel dans le cycle d'apprentissage (L), il se produit une commutation à la phase de maintien en pression lorsque ce volume de commutation théorique ($V_{tXfrL}$) est atteint.

13. Procédé selon l'une des revendications précédentes, **caractérisé en ce que** dans le cycle d'apprentissage (L), un volume de référence théorique ($V_{tRefL}$) est déterminé à une valeur de pression de référence ($p_{Ref}$).

14. Procédé selon l'une des revendications précédentes, **caractérisé en ce que** dans un cycle d'apprentissage (P), qui est en aval du cycle d'apprentissage (L), un volume de référence théorique ($V_{tRefP}$) est déterminé à la même valeur de pression de référence ($p_{Ref}$).

15. Procédé selon l'une des revendications précédentes, **caractérisé en ce que** le volume de remplissage de commutation réel ($\Delta V_{rXfrL}$ dans le cycle d'apprentissage L est déterminé avec

$$\Delta V_{rXfrL} = \frac{V_{tRefL}}{1 - k(p_{Ref})} - \frac{V_{tXfrL}}{1 - k(p_{XfrL})}$$

dans lequel le temps $t_A$ est l'obtention de la pression de référence $p_{Ref}$ et le temps $t_B$ est le point de conversion, et le volume de remplissage réel $\Delta V_{rP}$ à un temps $t_C$ dans le cycle de production (P) est calculé avec

$$\Delta V_{rP} = \frac{V_{tRefP}}{1 - k(p_{Ref})} - \frac{V_{tPC}}{1 - k(p_{PC})}$$

et la commutation à la phase de maintien en vapeur est introduite dans le cycle de production (P), quand

$$\Delta V_{rP} \geq \Delta V_{rXfrL}$$

.

16. Procédé selon l'une des revendications précédentes, **caractérisé en ce que** le procédé est appliqué pendant une phase de maintien en pression régulée par pression, dans lequel dans la phase de maintien en pression, l'adaptation de paramètres de machine pour atteindre un volumique de remplissage réel idéal $\Delta V_{ri}$ est effectué par adaptation du maintien en pression.

**17.** Procédé selon l'une des revendications précédentes, **caractérisé en ce que** le placement de la masse pouvant être moulée par injection dans l'au moins une cavité (4) d'un moule (3) est effectué au moyen d'une vis sans fin d'avancement ou d'un piston.

**18.** Procédé selon l'une des revendications précédentes, **caractérisé en ce que** les masses pouvant être moulées par injection sont des fontes de thermoplastiques ou des masses de moulage de résine thermodurcissable ou des silicones ou des vernis.

**19.** Procédé selon l'une des revendications précédentes, **caractérisé en ce que** des actions supplémentaire d'un procédé de moulage par injection comme par ex. l'actionnement d'extracteurs de noyau, l'ouverture et la fermeture de cascades qui sont commandées par le trajet d'injection, c'est à dire en fonction du volume d'injection ou de la durée, sont commandées en fonction du procédé conformément au volume de remplissage réel $\Delta V_r$ déterminé.

**20.** Procédé selon l'une des revendications précédentes, **caractérisé en ce qu'**au moins les valeurs apprises pour le volume de remplissage de commutation réel ($\Delta V_{rXfrL}$) et la pression de référence ($p_{ref}$) sont transmises d'une première machine de moulage par injection à une seconde machine de moulage par injection de construction identique ou non.

Figur 1a

Figur 1b

Figur 1c

100 cm³
1 bar

V1

1

100 cm³
1 bar

V1

1

60 cm³
500 bar

V1'

V2

60 cm³
1000 bar

V1'

V2

1

61,5 cm³
1 bar

V1'

V2

63,1 cm³
1 bar

V1'

V2

Figur 2a

Figur 2b

Figur 3b

Figur 3a

$T_u$ = Umgebungstemperatur
$V_u$ = spez. Volumen bei Umgebungsbedingungen

Figur 4

Figur 5

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 102007030637 B4
- DE 102005016617 B3
- EP 1074374 A1
- JP H01146718 A

- US 5260010 A
- DE 3608973 A1
- DE 102013111328 A1
- DE 102013111257 B3